# EUROPEAN PATENT SPECIFICATION

(11) **EP 1 998 604 B1**
(45) Date of publication and mention of the grant of the patent: **02.05.2012**
(21) Application number: 07723732.9
(22) Date of filing: 29.03.2007
(51) Int. Cl.: A01B 35/22

(54) **REVERSIBLE TOOL FOR AGRICULTURAL SUBSOILERS AND THE LIKE**
WENDEWERKZEUG FÜR LANDWIRTSCHAFTLICHE UNTERGRUNDPFLÜGE UND DERGLEICHEN
OUTIL RÉVERSIBLE POUR ENSOUILLEUSES AGRICOLES ET SIMILAIRES

(30) Priority: 30.03.2006 IT PD20060111; 12.07.2006 IT PD20060285
(43) Date of publication of application: 10.12.2008
(73) Proprietor: Maschio Gaspardo S.p.A., 35011 Campodarsego (PD) (IT)
(72) Inventor: MASCHIO, Egidio, 35011 Campodarsego (IT)
(74) Representative: Cantaluppi, Stefano
(86) International application number: PCT/EP2007/002788
(87) International publication number: WO 2007/112923

(56) References cited:
- CA-A1- 2 256 074
- DE-A1- 3 133 138
- DE-B- 1 100 361
- DE-B- 1 151 401
- FR-A1- 2 662 044
- US-A- 1 345 209
- US-A- 1 365 276

## Description

### Technical field

The subject of the present invention is a reversible tool for agricultural subsoilers and the like of the type including the characteristics mentioned in the preamble of the main claim.

### Technological background

In the technical field of toothed cultivators, and in particular of agricultural subsoilers, it is known to use reversible tools including a plate-like body at the longitudinally opposed ends of which are defined respective chisels which, by turning the tool through 180°, may be presented alternatively in the working position on the anchor member of the subsoiler.

Such tools are normally fixed to the respective anchor members or blades of the subsoiler by means of nut and bolt connections, fitting into holes provided on the plate-like body and into corresponding holes provided in a similar position on the anchor member of the subsoiler. The advantage of these tools lies mainly in the fact that, once one of the two chisels is worn, the tool can be re-used a second time by removing it from the anchor member and fixing it again in a position turned through 180°.

This is the solution which has until now made it possible to minimize the cost of the tool.

The main problem resulting from the structure of this type of reversible tool is the difficulty of reversal and exchange owing to the wear on the heads of the fixing bolts, caused by the fact that the heads are located in proximity to the working surfaces of the tool itself and are subjected to continuous contact with the soil which is being worked. In all cases in which the wear on the heads of the bolts is such as to prevent normal operation of the bolts in order to unscrew them with a suitable spanner it is necessary to resort to cutting them, with an adverse effect on the time spent by the operator on the removal of the tools.

In order to remedy this drawback, tools have been developed which are fixed to the anchor member of the subsoiler with quick-fix connectors, fitting into holes provided on plates of the tool remote from the working surfaces and into corresponding holes provided in a similar position on the anchor member of the subsoiler. Such tools, in order to benefit from this property, however, lose the possibility of reversible mounting, so that when wear has occurred on the single chisel with which they are equipped, they must necessarily be exchanged.

US-A-1345209 discloses a reversible tool with quick release connector in accordance with the preamble of claim 1.

### Description of the invention

The problem underlying the present invention is that of providing a tool designed particularly in order to find application on agricultural subsoilers and similar apparatuses, equipped with toothed cultivator devices, said tool being structurally and functionally designed to remedy all the drawbacks mentioned with reference to the prior art cited.

This problem and others which will become clearer hereinafter are confronted and solved by the invention by means of a reversible tool produced in accordance with the claims which follow.

### Brief description of the drawings

The characteristics and advantages of the invention will become clearer from the detailed description of a preferred, but not exclusive, exemplary embodiment thereof illustrated by way of non-limiting example with reference to the appended drawings, in which:
- Figure 1 is a partial diagrammatic view of an agricultural subsoiler, seen in its essential components;
- Figure 2 is an axonometric exploded view of a detail of the agricultural subsoiler of Fig. 1;
- Figure 3 is an axonometric view of a reversible tool for agricultural subsoilers;
- Figure 4 is a side view of the reversible tool of Fig. 3;
- Figure 5 is an axonometric exploded view of a constructional variant of an agricultural subsoiler according to the present invention;
- Figure 6 is an axonometric view of a reversible tool according to the constructional variant of the agricultural subsoiler of Fig. 5;
- Figure 7 is a side view of the reversible tool of Fig. 6;
- Figure 8 is a front view of the reversible tool of Fig. 6;
- Figure 9 is a front view of a further constructional variant of a reversible tool according to the present invention.

### Preferred embodiments of the invention

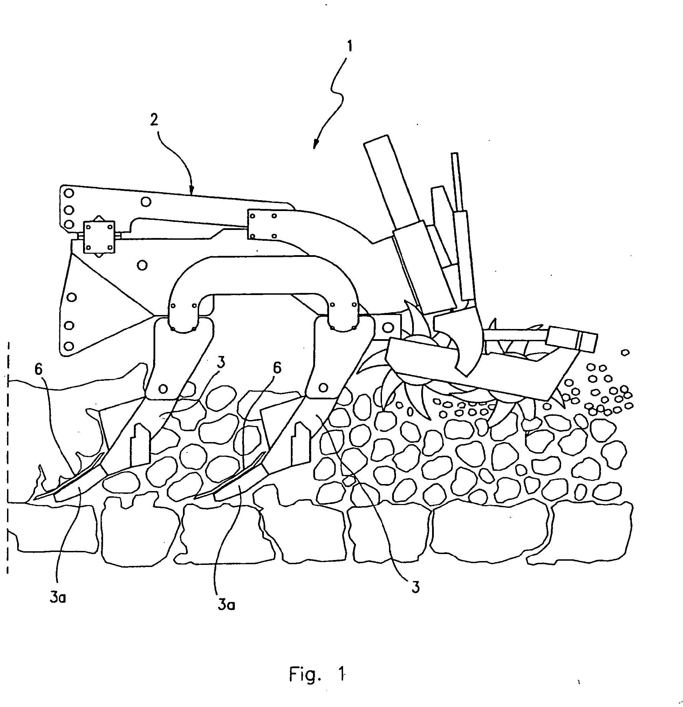

With reference to Figure 1, an agricultural subsoiler, indicated as a whole by 1, comprises in its essential parts a frame 2 on which are mounted a plurality of anchor members 3, elongate in shape and tapered at the end part 3a, and on which are fixed a sod-breaker 4, two helical hoes 5 and a reversible tool 6.

The free end portion 3a of the anchor member 3 is provided with two surfaces 3b, 3c, respectively front and back, and with two lateral surfaces 3d, 3e.

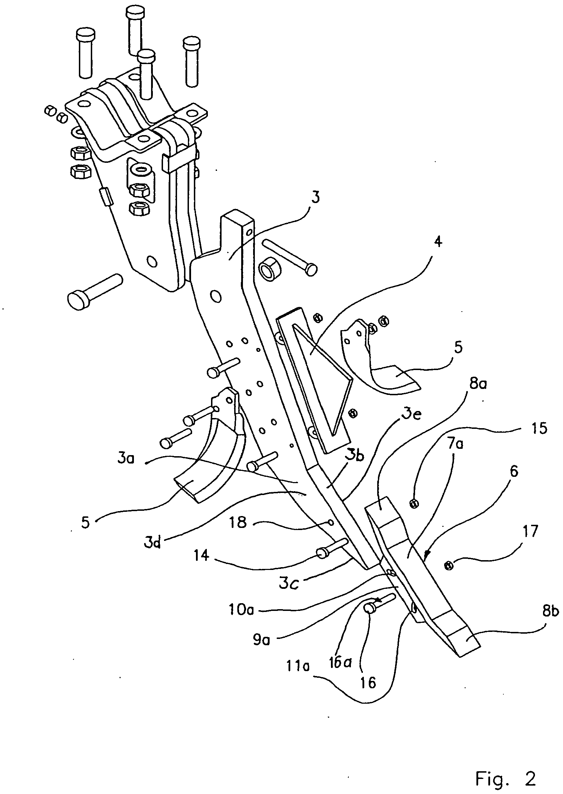

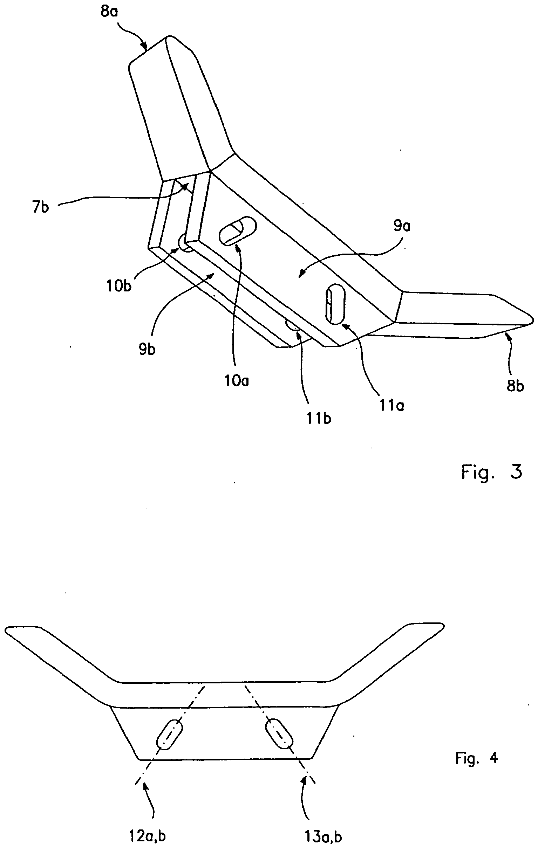

The tool 6 is shown in detail, together with the means which enable it to be fixed to the anchor member 3, in Figures 2, 3 and 4.

It comprises a plate-like body 7 elongate in a prevalent longitudinal direction, having opposed surfaces 7a, 7b, respectively front and back, both substantially rectangular in plan. At the opposed longitudinal ends of the plate-like body 7, corresponding to the opposed minor sides of the front surface 7a, a respective chisel 8a, 8b is defined.

The tool 6 comprises the fixing means described hereinafter for fixing the plate-like body 7 onto the end part 3a of the anchor member 3 so as to present one or the other of the chisels 8a, 8b in the working position.

The fixing means comprise two plates 9a, 9b, parallel to each other and welded on the plate-like body 7 on that side where the back surface 7b is located and in a substantially middle position. The distance between the plates 9a, 9b is such as to define between them a seat for receiving the end part 3a of the corresponding anchor member 3.

On both the plates 9a, 9b, in corresponding and coaxial positions, respective slot-like apertures 10a, 10b and 11a, 11b are provided, having respective major axes 12a, 12b and 13a, 13b converging towards the back surface 7b.

The fixing means further include a quick-release pin 14 with the corresponding split pin 15 and a bolt 16a comprising screw 16 and nut 17. Two pins or two bolts may similarly be used.

On the end part 3a of the anchor member 3 is a cylindrical hole 18, passing between the surfaces 3d, 3e in a position such that when it is aligned with the pair of apertures 10a, 10b, preferably with the part of these latter more distant from the back surface 7b, the corresponding part more distant from the same surface, of the pair of holes 11a, 11b, is aligned with the tangent to the back of the anchor member 3, in its geometrically corresponding part.

In practice, when the pin 14 is inserted into the hole 18 and received in the pair of apertures 10a, 10b, the bolt 16a received in the second pair of holes 11a, 11b is set against the end part of the anchor member so as to hold it behind the surface 7b.

The coupling between the end part 3a of the anchor member 3 and the tool 6 may be effected in two positions which result in the presentation in the working state of one or the other of the two chisels 8a, 8b, permitting the reversibility of the tool.

The first position is obtained by placing the back surface 7b of the plate-like body 7 against the front surface 3b of the anchor member 3, so that the inner surfaces of the plates 9a, 9b are alongside, on opposite sides, the lateral surfaces of the end part 3a of the anchor member 3.

By aligning the apertures 10a, 10b and the hole 18, the pin 14 is positioned as indicated and locked with the split pin 15. The screw 16 is likewise positioned in the apertures 11a, 11b and locked in position with the nut 17.

In order to rotate the reversible tool through 180° with respect to the position described in the previous paragraph, it is first removed from the anchor member, placing the back surface 7b against the front surface 3b, so that the inner surfaces of the plates 9a, 9b are alongside, on opposite sides, the lateral surfaces of the end part 3a of the anchor member 3. By aligning the apertures 11a, 11b and the hole 18, inserting the pin 14 therein, locking the pin on the opposite side with the split pin 15, inserting the screw 16 into the holes 10a, 10b and locking it on the opposite side with the nut 17, the locking of the tool on the anchor member is achieved.

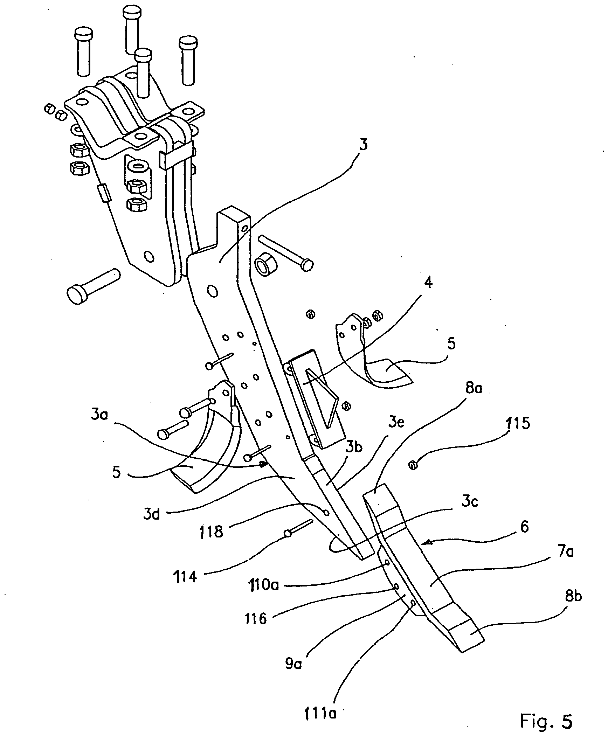

According to a constructional variant of the invention and with reference to Figures 5 to 8, the fixing means for fixing the plate-like body 7 to the end part 3a of the anchor member 3 comprise the pairs of coaxial cylindrical holes 110a, 110b and 111a, 111b provided, respectively, on the plates 9a, 9b.

The fixing means further include a bolt comprising a screw 114 and nut 115 and a pin 116, of the peg type, rigidly secured to the tool 6 by means of welding of its opposed longitudinal ends to the plates 9a, 9b. The position of the peg 116 is equidistant from the pairs of holes 110a, 110b and 111a, 111b and close to the opposite edge of the plates 9a, 9b from the back surface 7b of the plate-like body 7.

According to a constructional variant of the invention, in place of the screw 114 and the nut 115, a quick-release retaining pin may be used.

In a further constructional variant of the tool 6, the pin 116 is constituted by the shank of a bolt engaged in two corresponding holes of the plates 9a, 9b.

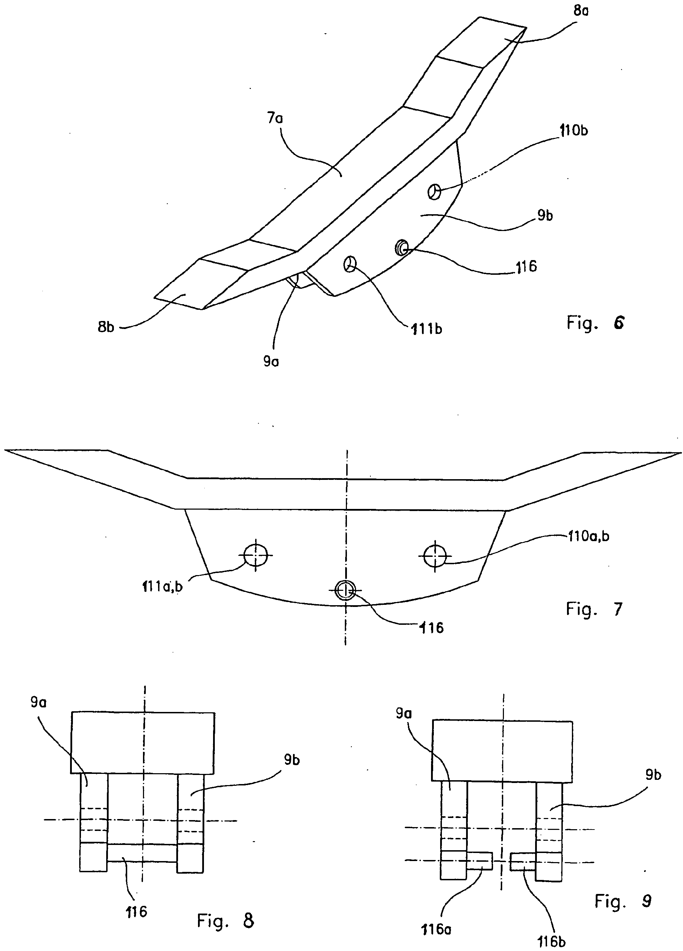

With reference to Figure 9, in a constructional variant of the tool 6, in place of the pin 116, two coaxial protuberances 116b, 116c are provided, placed respectively on the plates 9a, 9b and extending longitudinally towards each other, in the receiving seat contained between the plates 9a, 9b.

In a further constructional variant of the tool 6, in place of the pin 116, a tooth standing up from one of the plates 9a, 9b is provided.

On the end portion 3a of the anchor member 3 is the hole 118, passing between the surfaces 3d, 3e in a position such that when it is aligned with the pair of holes 110a, 110b, preferably with the part of these latter more distant from the back surface 7b, the pin 116 can be aligned with the tangent to the back surface 3c of the anchor member 3, in its geometrically corresponding part.

In practice, when the screw 114 is inserted in the hole 118 and received in the pair of holes 110a, 110b, the pin 116 is set against the end part of the anchor member so as to hold it behind the surface 7b.

The coupling between the end portion 3a of the anchor member 3 and the tool 6 may be effected in two positions which result in the presentation in the working state of one or the other of the two chisels 8a, 8b, permitting the reversibility of the tool.

The first position is obtained by placing the back surface 7b of the plate-like body 7 against the front surface 3b of the anchor member 3, in such a way that the inner surfaces of the plates 9a, 9b are alongside, on opposite sides, the lateral surfaces of the end portion 3a of the anchor member 3. By aligning the holes 110a, 110b and 118, the screw 114 is positioned as indicated and locked with the nut 115.

In order to rotate the reversible tool through 180° with respect to the position described in the previous paragraph, it is first removed from the anchor member, placing the back surface 7b against the front surface 3b, in such a way that the inner surfaces of the plates 9a, 9b are alongside, on opposite sides, the lateral surfaces of the end portion 3a of the anchor member 3. By aligning the holes 111a, 111b and 118, inserting the screw 114 therein and locking the screw on the opposite side with the nut 115, the locking of the tool on the anchor member is achieved.

The invention makes it possible to position the coupling means between anchor member 3 and tool 6 on protected surfaces in such a way as to prevent wear on them and facilitate their installation and removal.

The reversible tool of the present invention thus achieves the aims proposed, offering, with respect to the prior art, greater speed in the reversal and exchange operations.

## Claims

1. A reversible tool (6) for agricultural subsoilers and the like, including an elongate plate-like body (7) at the opposite ends of which respective chisels (8a, 8b) are defined, and fixing means for the tool (6) for fixing said body (7) to the free end (3a) of an anchor member (3) of a subsoiler (1) reversibly so as to present in the working position one or the other of said chisels (8a, 8b), said fixing, means comprising quick-release connectors, wherein said fixing means comprise a pair of parallel and spaced plates (9a, 9b) between which a seat for coupling with said anchor member (3) is defined, said plates (9a, 9b) being fixed on the same side of said body (7), intermediate between said chisels (8a, 8b), and **characterized in that** said plates (9a, 9b) areprovided with at least two pairs of coaxial apertures (10a, 10b, 11a, 11b), at least one of said pairs being intended to receive a respective pin (14) or bolt (16a) of the quick-release type..

2. A tool according to claim 1, wherein said plates are provided with two pairs of coaxial apertures (10a, 10b, 11a, 11b), each pair being intended to receive a respective pin (14) or bolt (16a) of the quick-release type.

3. A tool according to claim 2, wherein said apertures on each plate are arranged in symmetrical mirror image and are slot-like with major axes converging near said plate-like body.

4. A tool according to claim 2 or 3, wherein said apertures (10a, 10b, 11a, 11b) are arranged, with respect to said anchor member, such that in both the reversible positions of said tool a pair of apertures is aligned with a through-hole (18, 118) in said anchor member (3) and the other pair of apertures is aligned with a tangent to a back part (3c) of said anchor member.

5. A tool according to claim 1, wherein said apertures are through-holes (110a, 110b, 111a, 111b) in corresponding positions such that when the tool (6) is mounted on the anchor member (3) in either of the two operating positions, corresponding holes on the two plates are coaxial with the same hole (18, 118) of the end portion (3a) of the anchor member in order to receive therein a retaining pin or a connection of the screw (114) and nut (115) type.

6. A tool according to claim 1, wherein on at least one of said plates (9a, 9b) locating means are provided, extending into said seat for locating a back surface (3c) of said anchor member (3) when said tool (6) is mounted in one or the other of said operating positions.

7. A tool according to claim 6, wherein said locating means comprise two protuberances (116b, 116c) standing up from the respective plates (9a, 9b) in said seat.

8. A tool according to claim 7, wherein said protuberances (116b, 116c) are coaxial.

9. A tool according to claim 7, wherein said locating means comprise a pin (116) extending from one to the other of said plates.

10. A tool according to claim 9, wherein said pin (116) is of the peg or screw and nut type.

## Patentansprüche

1. Wendewerkzeug (6) für landwirtschaftliche Untergrundpflüge und dergleichen, das einen verlängerten plattenähnlichen Körper (7) an gegenüberliegenden Enden, an denen jeweilige Grubber (8a, 8b) definiert sind, und ein Fixiermittel für das Werkzeug (6) zum Fixieren des Körpers (7) am freien Ende (3a) eines Ankerelements (3) eines Untergrundpfluges (1) umfasst, um in der Arbeitsposition den einen oder den anderen der Grubber (8a, 8b) aufzuweisen, wobei das Fixiermittel Schnellanschlüsse aufweist, wobei das Fixiermittel ein Paar von parallelen und beabstandeten Platten (9a, 9b) aufweist, zwischen denen ein Sitz zur Verbindung mit dem Ankerelement (3) definiert ist, wobei die Platten (9a, 9b) auf derselben Seite des Körpers (7) zwischen den Grubbern (8a, 8b) fixiert sind, **dadurch gekennzeichnet, dass** die Platten (9a, 9b) mit zumindest zwei Paaren von koaxialen Öffnungen (10a, 10b, 11a, 11 b) versehen sind, wobei zumindest eines von den Paaren vorgesehen ist, um einen jeweiligen Stift (14) oder Bolzen (16a) des Schnellverschlusstyps aufzunehmen.

2. Werkzeug gemäß Anspruch 1, wobei die Platten mit zwei Paaren von koaxialen Öffnungen (10a, 10b, 11a, 11 b) versehen sind, wobei jedes Paar vorgesehen ist, einen jeweiligen Stift (14) oder Bolzen (16a) des Schnellverschlusstyps aufzunehmen.

3. Werkzeug gemäß Anspruch 2, wobei die Öffnungen auf jeder Platte spiegelsymmetrisch und schlitzähnlich mit Hauptachsen, die in der Nähe des plattenähnlichen Körpers zusammenlaufen, angeordnet sind.

4. Werkzeug gemäß Anspruch 2 oder 3, wobei die Öffnungen (10a, 10b, 11a, 11 b) bezüglich des Ankerelements angeordnet sind, so dass in beiden reversiblen Positionen des Werkzeugs ein Paar der Öffnungen mit einer Durchgangsöffnung (18, 118) im Ankerelement (3) und ein anderes Paar der Öffnungen mit einer Tangente zu einem hinteren Teil (3c) des Ankerelements ausgerichtet ist.

5. Werkzeug gemäß Anspruch 1, wobei die Öffnungen Durchgangsöffnungen (110a, 110b, 111 a, 111 b) in jeweiligen Positionen sind, so dass, wenn das Werkzeug (6) auf dem Ankerelement (3) in einer von den beiden Betriebspositionen befestigt ist, die jeweiligen Öffnungen in den beiden Platten mit derselben Öffnung (18, 118) des Endbereichs (3a) des Ankerelements koaxial sind, um einen Haltestift oder eine Verbindung vom Schraube (114) - Mutter (115) - Typ darin aufzunehmen.

6. Werkzeug gemäß Anspruch 1, wobei zumindest auf einer der Platten (9a, 9b) Anordnungsmittel vorgesehen sind, die sich in den Sitz zum Anordnen einer Rückfläche (3c) des Ankerelements (3) erstreckt, wenn das Werkzeug (6) in der einen oder der anderen der Betriebspositionen befestigt ist.

7. Werkzeug gemäß Anspruch 6, wobei das Anordnungsmittel zwei Vorsprünge (116b, 116c) aufweist, die von den jeweiligen Platten (9a, 9b) im Sitz aufragen.

8. Werkzeug gemäß Anspruch 7, wobei die Vorsprünge (116b, 116c) koaxial sind.

9. Werkzeug gemäß Anspruch 7, wobei das Anordnungsmittel einen Stift (116) aufweist, der sich von der einen zu der anderen der Platten erstreckt.

10. Werkzeug gemäß Anspruch 9, wobei der Stift (116) ein Zapfen oder Schraube-Mutter-Typ ist.

## Revendications

1. Outil réversible (6) pour ensouilleuses agricoles et similaires, incluant un corps allongé semblable à une plaque (7) aux extrémités opposées de laquelle sont définies des arêtes tranchantes respectives (8a, 8b), et des moyens de fixation pour l'outil (6) pour fixer ledit corps (7) à l'extrémité libre (3a) d'un élément d'ancrage (3) d'une ensouilleuse (1) de manière réversible de façon à présenter dans la position de travail l'une ou l'autre desdites arêtes (8a, 8b), lesdits moyens de fixation comprenant des connecteurs à libération rapide, dans lequel lesdits moyens de fixation comprennent une paire de plaques parallèles et espacées (9a, 9b) entre lesquelles est défini un siège pour le couplage avec ledit élément d'ancrage (3), lesdites plaques (9a, 9b) étant fixées sur le même côté dudit corps (7), en position intermédiaire entre lesdites arêtes (8a, 8b), et **caractérisé en ce que** lesdites plaques (9a, 9b) sont dotées d'au moins deux paires d'ouvertures coaxiales (10a, 10b, 11a, 11b), l'une au moins desdites paires étant destinée à recevoir une broche respective (14) ou un boulon respectif (16a) du type à libération rapide.

2. Outil selon la revendication 1, dans lequel lesdites plaques sont dotées de deux paires d'ouvertures coaxiales (10a, 10b, 11a, 11b), chaque paire étant destinée à recevoir une broche respective (14) ou un boulon respectif (16a) du type à libération rapide.

3. Outil selon la revendication 2, dans lequel lesdites ouvertures sur chaque plaque sont agencées de manière symétrique par rapport à un plan et sont semblables à des fentes avec des grands axes convergeant à proximité dudit corps en forme de plaque.

4. Outil selon la revendication 2 ou 3, dans lequel lesdites ouvertures (10a, 10b, 11a, 11b) sont agencées, par rapport audit élément d'ancrage, de telle façon que dans les deux positions réversibles dudit outil une paire d'ouvertures est alignée avec un trou traversant (18, 118) dans ledit élément d'ancrage (3) et l'autre paire d'ouverture est alignée avec une tangente à une partie dorsale (3c) dudit élément d'ancrage.

5. Outil selon la revendication 1, dans lequel lesdites ouvertures sont des trous traversants (110a, 110b, 111a, 111b) dans des positions correspondantes de telle façon que, quand l'outil (6) est monté sur l'élément d'ancrage (3) dans l'une ou l'autre des deux positions de fonctionnement, des trous correspondants dans les deux plaques sont coaxiaux avec le même trou (18, 118) de la portion terminale (3a) de l'élément d'ancrage afin de recevoir l'intérieur une tige de retenue ou une connexion du type à vis (114) et écrou (115).

6. Outil selon la revendication 1, dans lequel des moyens de blocage sont prévus sur l'une au moins desdites plaques (9a, 9b), lesdits moyens s'étendant jusque dans ledit siège pour localiser une surface dorsale (3c) dudit élément d'ancrage (3) quand ledit outil (6) est monté dans l'une ou l'autre desdites positions de fonctionnement.

7. Outil selon la revendication 6, dans lequel lesdits moyens de localisation comprennent de protubérances (116b, 116c) dressées depuis les plaques respectives (9a, 9b) dans ledit siège.

8. Outil selon la revendication 7, dans lequel lesdites protubérances (116b, 116c) sont coaxiales.

9. Outil selon la revendication 7, dans lequel lesdits moyens de localisation comprennent une broche (116) s'étendant depuis l'une desdites plaques en direction de l'autre.

10. Outil selon la revendication 9, dans lequel ladite broche (116) est du type téton ou du type à vis-et-écrou.
